# NEW EUROPEAN PATENT SPECIFICATION

(11) **EP 3 625 811 B2**
(45) Date of publication and mention of the opposition decision: **30.04.2025**
(45) Mention of the grant of the patent: 06.04.2022
(21) Application number: 18725186.3
(22) Date of filing: 15.05.2018
(51) Int. Cl.: H01G 4/18, H01G 4/32

(54) **FILM CAPACITOR**
SCHICHTKONDENSATOR
CONDENSATEUR À FILM

(30) Priority: 15.05.2017 ES 201730693; 10.08.2017 DE 102017118202
(43) Date of publication of application: 25.03.2020
(73) Proprietor: TDK Electronics AG, 81671 München (DE)
(72) Inventor: ALBA, Carlos, 29009 Màlaga (ES); PELÀEZ, David, 29620 Torremolinos (ES); CABO, Lucia, 91058 Erlangen (DE); MAJER, Anna-Lena, 81476 München (DE)
(74) Representative: Epping - Hermann - Fischer
(86) International application number: PCT/EP2018/062581
(87) International publication number: WO 2018/210854

(56) References cited:
- EP-A1- 0 992 531
- EP-A1- 0 992 531
- EP-A1- 2 717 281
- EP-A1- 3 332 961
- EP-A1- 3 615 597
- WO-A1-2012/022409
- WO-A1-2017/022706
- WO-A1-2018/197034
- WO-A1-2018/197034
- WO-A1-2018/210854
- DE-A1- 19 639 877
- DE-A1- 4 304 310
- JP-A- 2015 016 569
- US-A- 5 724 222
- US-A- 6 094 337
- US-A- 6 094 337
- US-A1- 2008 287 614
- RUCHATZ D ET AL: "Ethene-Norborene Copolymerization with Homogenous Metallocene and Half-Sandwich Catalysts: Kinetics and Relationships Between Catalyst Structure and Polymer Structure. 3. Copolymerization Parameters and Copolymerization Diagrams", MACROMOLECULES, vol. 31, no. 15, 28 July 1998 (1998-07-28), pages 4681 - 4683, XP000769966, ISSN: 0024-9297, DOI: 10.1021/MA971043B
- TOPAS ADVANCED POLYMERS GMBH: "Technical Data Sheet - TOPAS Advanced Polymers", 1 July 2019 (2019-07-01), pages 1 - 1, XP055757599, Retrieved from the Internet <URL:www.topas.com> [retrieved on 20201207]
- “Physico-chemical ageing of ethylene–norbornene copolymers: a review“ von Wowro Sonia Rosine Lago et. al, veröffentlicht am 27. Februar 2017
- Auszug aus dem Fachbuch „Capacitors“ von R.P.Deshpande, ISBN 978-0- 07-184856-5, veröffentlicht 2015, Kapitel 4, S. 50-62
- Auszug aus der Website „steinerfilm.de“, veröffentlicht am 18. Dezember 2016
- Datenblatt TOPAS 6013F-04
- Datenblatt TOPAS Cyclic Olefin Copolymers
- Datenblatt Bicyclo[2.2.1]hept-2-ene;ethene
- Datenblatt TOPAS 6013F-04 (processing datasheet)

## Description

The present invention concerns a film capacitor.

Metallized film capacitors are critical components for many applications in industrial, automotive and pulse-power electronics. The physical characteristics of the polymer dielectric material in the capacitor are the primary factors determining the performance of the capacitor.

Capacitors comprising a film consisting of pure biaxiallyoriented polypropylene (BOPP) show a good performance up to temperatures of 105 °C. Above this temperature, for example at 125 °C, the dielectric breakdown strength and the lifetime are significantly reduced. Neither BOPP nor other commercially available polymer dielectric materials like polyethylene terephthalate (PET) or polycarbonate (PC) can operate at temperatures above 125°C.

Several commercially available polymer dielectric materials which meet high temperature capabilities, such as polyethylene naphthalate (PEN) and polyphenylene sulfide (PPS) are limited by an insufficient self-healing capability which is one of the basic requisites for proper functioning of any metallized film capacitor.

US 6 094 337 A concerns a biaxially oriented polypropylene film which can be used as the dielectric of a capacitor.

Accordingly, there is a demand for metallized film capacitors that can operate at temperatures above 105°C, for example at temperatures around or higher than 125°C, ideally keeping advantageous properties of BOPP such as a good self-healing ability or a relatively low dissipation factor. The present invention solves the problem of providing an advantageous film capacitor. The metallized film capacitor can be operated at temperatures above 105°C while still providing advantageous properties of a BOPP-based metallized film capacitor.

This object is solved by the subject-matter of claim 1.

A film capacitor is proposed which comprises a film that consists of a blend of polypropylene and cyclo-olefin copolymer (COC).

Polypropylene is a thermoplastic polymer. The polypropylene used in the blend is in homopolymer form. Polypropylene can constitute a major weight percentage of the blend. Cyclo-olefin copolymer is an amorphous polymer. The term "blend" can be defined as a mixture of materials, i.e. of polypropylene and cyclo-olefin copolymer.

The film capacitor comprising a film of the blend of polypropylene and cyclo-olefin copolymer shows advantageous properties. In particular, the self-healing ability of the film capacitor at temperatures up to 130°C is significantly enhanced with respect to a reference capacitor comprising a film consisting of pure polypropylene. Life tests have shown that the estimated mean time to failure (MTTF) of the film capacitor can be three times higher than that of the reference capacitor comprising the film of pure polypropylene.

As polypropylene provides a major contribution to the film of the film capacitor, the costs of the blend material are moderate. Moreover, the film can be manufactured using state-of-the-art manufacturing processes, for example biaxially stretching in tenter lines, such that its production can be cost-efficient.

The cyclo-olefin copolymer consists of ethylene and norbornene. The cyclo-olefin copolymer consists of ethylene and norbornene. Preferably, the cyclo-olefin copolymer consists of an amorphous random copolymer of ethylene and norbornene. Cyclo-olefin copolymers are known in the industry as COC or COP.

The cyclo-olefin copolymer consists of ethylene in the range of 23 weight% to 27 weight% and norbornene in the range of 73 weight% to 77 weight%. This composition of cyclo-olefin copolymer results in a relatively low dissipation. Moreover, life tests have shown that this composition of cylo-olefin copolymer results in a long lifetime of the capacitor. As already discussed above, the cyclo-olefin copolymer consists of ethylene and norbornene.

The proportion of polypropylene in the blend is equal or greater than two-thirds by weight of the blend.

Preferably, the blend comprises polypropylene in the range of 70 weight% to 90 weight%, more preferably in the range of 78 weight% to 82 weight%.

The polypropylene may be a capacitor grade polypropylene. Capacitor grade polypropylene may refer to polypropylenes having a high purity which is particularly suitable for use in a film capacitor.

The film may be extruded and biaxially-stretched. The film is metallized. In the following, the present invention is discussed in more detail with respect to the figures.
- Figure 1: shows a film capacitor.
- Figure 2: shows a flow diagram representing the method for manufacturing the film of the film capacitor.

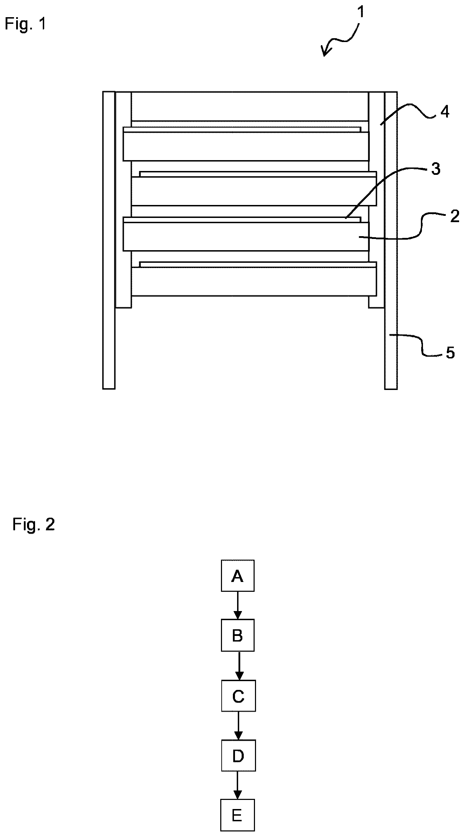

Film capacitors are electrical capacitors with an insulating plastic film as the dielectric. Figure 1 shows a capacitor 1 according to the present invention comprising a dielectric film 2 which has been metallized on one side. The metallization forms an electrode 3 of the capacitor 1. The electrodes 3 of the film capacitor 1 are metallized by applying an alloy of metals on the surface of the film. In particular, the electrodes 3 comprise any alloy of aluminum, zinc or magnesium.

In the film capacitor 1 shown in Figure 1, the films 2 are stacked on one another. Alternatively, two of the films 2 can be wound into a cylinder-shaped winding to form the capacitor 1. The winding can further be flattened into an oval shape by applying mechanical pressure.

The electrodes 3 are contacted by a contact layer 4, which is also referred to as schoopage. Moreover, the film capacitor 1 comprises terminals for electrically contacting the capacitor 1.

According to the invention, the film 2 consists of a blend of polypropylene and cyclo-olefin copolymer wherein the cyclo-olefin copolymer consists of ethylene and norbornene. The polypropylene has a greater percentage than the cyclo-olefin copolymer by weight of the blend. In particular, the polypropylene has a percentage by weight of two-thirds or more.

In the following, the manufacturing method for manufacturing the film 2 consisting of a blend of polypropylene and cyclo-olefin copolymer is described. Figure 2 shows a flow diagram representing the method for manufacturing the film. The manufacturing method uses state-of-the-art customary processes.

In a first step A, the polypropylene and the cyclo-olefin copolymer are blended together to form the blend. In the subsequent step B, the blend is melted and mixed to form a molten polymer. In the next step C, the molten polymer is filtered to form a filtered molten polymer. In the next step D, the filtered molten polymer is extruded through a flat die to form an extruded capacitor film. In the next step E, the extruded capacitor film is biaxially-stretched to form a biaxially-stretched capacitor film.

Afterwards, the biaxially-stretched capacitor film is metallized using customary processes. Before the metallizing, the film may be surface-treated by means of corona or flame. The metallization process is preferably carried out by Physical Vapor Deposition (PVD) in vacuum. The metal layer is applied at least on one surface of the film. The metal layer consists of any suitable metal, preferably aluminium, zinc, gold, silver or magnesium or appropriate alloys of the previously mentioned materials. The thickness of the metal layer usually ranges from 10 nm to 100 nm.

The capacitor has good self-healing abilities up to temperatures of 130°C. The cost of the base material for the film is higher than that of the reference capacitor because of the contribution of cyclo-olefin copolymer. But as the majority contribution to the weight is by polypropylene, the cost of the base material is moderate. As discussed above, the manufacturing process is based on state-of-the-art manufacturing steps. Thus, the production can be carried out in a cost-efficient manner.

In the following, life test measurements are described which compare capacitors according to the present invention to a reference capacitor. The values of capacitance were measured on finished capacitors by a Keysight E4980AL Precision LCR Meter.

Table 1 provides a list of the capacitors used in the present tests.

**TABLE 1**

| | Blend composition | | COC composition | | Capacitance at 1kHz in µF |
|---|---|---|---|---|---|
| Sample | Polypropylene [%] | COC [%] | Norbornene [%] | Ethylene [%] | |
| 1 | 100% | 0% | 0% | 0% | 9,56 |
| 2 | 80% | 20% | 75% | 25% | 9,33 |
| 3 | 70% | 30% | 75% | 25% | 9,26 |
| 4 | 80% | 20% | 80% | 20% | 9,79 |

Sample 1 refers to a reference capacitor which comprises a film that consists only of polypropylene. Samples 2, 3 and 4 refer to capacitors according to the present invention which comprise a film containing varying percentages of a commercially available high crystallinity capacitor grade polypropylene resin and complementary percentages of two commercially available cyclo-olefin copolymers of ethylene and norbornene. In particular, the blend according to sample 2 comprises 80 weight% polypropylene and 20 weight% of cycloolefin copolymer, wherein the cyclo-olefin copolymer consists of 75 weight% norbornene and 25 weight% ethylene. The blend according to sample 3 comprises 70 weight% polypropylene and 30 weight% of cyclo-olefin copolymer, wherein the cycloolefin copolymer consists of 75 weight% norbornene and 25 weight% ethylene. The blend according to sample 4 comprises 80 weight% polypropylene and 20 weight% of cyclo-olefin copolymer, wherein the cyclo-olefin copolymer consists of 80 weight% norbornene and 20 weight% ethylene.

The blends of samples 1 to 4 have been biaxially-stretched into capacitor films of a thickness of 8 µm by customary processes. The films have been vacuum-metallized to obtain a sheet resistance of 20 Ohm/sq. Then, the films have been transformed into metallized film capacitors comprising a rolled, flat-pressed element inside a plastic box sealed with a potted epoxy resin by customary processes identical for all samples.

Table 1 shows the average values of capacitance for at least 20 capacitors from each sample. The capacitance is measured at 1 kHz. The capacitors according to samples 2 to 4 show a similar capacitance to the capacitor of sample 1 which comprises the film of pure BOPP.

The performance of samples 1 to 4 under operational stress caused by temperature and by a DC voltage have been evaluated through two life tests at different temperatures. Namely, the first test has been carried out at a temperature of 120°C and the second test has been carried out at a temperature of 130°C. Five capacitors per sample have been tested in each life test. The capacitance at 1 kHz and the loss tangent at 1 kHz of the capacitors have been monitored by regular measurements every 160 hours during the test. A capacitor has been considered as failing the test when it showed an irreversible short-circuit. Such a capacitor has therefore been removed from the test after the failure. A failure indicates that the capacitor has failed to self-heal at that point of time.

Table 2 shows the conditions under which the first life test has been performed.

**TABLE 2**

| Voltage Steps applied in long-endurance test A | | |
|---|---|---|
| DC Voltage in V | Field in V/µm | Time in Hours |
| 2080 | 260 | 1000 |
| 2240 | 280 | 1000 |

The test comprised two steps of increasing voltage as described in Table 2. During the first step which took one thousand hours of the test, a DC voltage of 2080 V has been applied, resulting in a field of 260 V per µm. During the second step which took the subsequent 1000 hours of the test, a DC voltage of 2240 V has been applied, resulting in a field of 280 V per µm.

Table 3 lists the elapsed times of the test at which irreversible breakdowns affected the capacitors from each sample and gives the estimated mean time to failure (MTTF).

**TABLE 3**

| | Hours to failure in long-endurance test A at 120°C (in increasing order) | | | | | Average MTTF |
|---|---|---|---|---|---|---|
| Sample | 1st. failure | 2nd. failure | 3rd. failure | 4th. failure | 5th. failure | Hours |
| 1 | 346 | 442 | 541 | 709 | 709 | 549 |
| 2 | no failure after 2.000 hours of test | | | | | > 2.000 |
| 3 | no failure after 2.000 hours of test | | | | | > 2.000 |
| 4 | 130 | 202 | 322 | 346 | 442 | 288 |

It can be gathered from Table 3 that the capacitors according to samples 2 and 3 did not show any failure after 2000 hours of test. The capacitor according to sample 4 showed an average MTTF of 288 hours. The reference capacitors according to sample 1 showed an average MTTF of 549 hours. Accordingly, samples 2 and 3 show a mean time to failure that is at least three times higher than that of the reference sample. It might even be much higher than three times because the failures in sample 1 took place at the first 1000 hours of the test and the voltage stress was increased in the subsequent second 1000 hours of the test.

The second life test was carried at a temperature of 130°C and comprises four steps of increasing voltage as described in Table 4.

**TABLE 4**

| Voltage Steps applied in long-endurance test B | | |
|---|---|---|
| DC Voltage in V | Field in V/µm | Time in Hours |
| 655 | 82 | 168 |
| 1000 | 125 | 336 |
| 1400 | 175 | 603 |
| 1665 | 208 | 448 |
| 1960 | 245 | 778 |

As can be seen in Table 4, the voltage stress has been increased in each phase of the test as a DC voltage of 655 V is applied in a first phase, then the voltage is increased to 1000 V in a second phase, then the voltage is increased to 1400 V in a third phase, to 1665 V in a fourth phase and finally to 1960 V in a fifth phase.

Table 5 lists the elapsed times of test at which irreversible breakdowns have affected the capacitors of samples 1 to 4.

**TABLE 5**

| Hours to failure in long-endurance test B at 130°C and increasing V_{dc} (in increasing order) | | | | | |
|---|---|---|---|---|---|
| Sample | 1st. failure | 2nd. failure | 3rd. failure | 4th. failure | 5th. failure |
| 1 | 672 | 1107 | 1300 | 1300 | 1559 |
| 2 | no failure after 2.333 hours of test | | | | |
| 3 | 2001 | 2333 | | | |
| 4 | 1300 | 1300 | 1300 | 1540 | 1835 |

Again, the capacitors according to sample 2 did not show any failure. Only two of the capacitors of sample 3 showed failures. Each of the failures of sample 3 occurred in the last phase of the test. The capacitors according to sample 4 showed failure later than the capacitors according to the reference sample 1.

Altogether, the life tests show that samples 2 and 3 based on blends containing respective 20 and 30 weight% of a cycloolefin copolymer with 75 percent by weight of norbornene and 25 percent by weight of ethylene clearly outperform reference sample 1 which is based on pure BOPP, not containing any cyclo-olefin copolymer. Moreover samples 2 and 3 also outperform sample 4 which is based on a blend containing 20% of cyclo-olefin copolymer with 80% by weight of norbornene and 20% by weight of ethylene. The outperformance is achieved by the lack of internal irreversible short-circuits that allow samples 2 and 3 to continue under test conditions. Accordingly, samples 2 and 3 are preferred embodiments. Samples 2 and 3 have in common that each of them comprises cyclo-olefin copolymer which consists of 75 % by weight norbornene and 25% by weight ethylene. Sample 2 is the more preferred sample as sample 2 outperforms sample 3 in the second life test.

### List of reference numerals

- 1: capacitor
- 2: film
- 3: electrode
- 4: contact layer
- 5: terminal

## Claims

1. A film capacitor (1) comprising a film (2) that consists of a blend of polypropylene and cyclo-olefin copolymer,wherein the polypropylene used in the blend is in homopolymer form, wherein the blend comprises an amount of at least two thirds by weight of polypropylene, and wherein the cyclo-olefin copolymer consists of ethylene in the range of 23 weight% to 27 weight% and norbornene in the range of 73 weight% to 77 weight%,
wherein the film capacitor comprises a metallization which forms electrodes (3) of the film capacitor (1) and the electrodes comprise any alloy of aluminium, zinc or magnesium,
wherein the (2) is metallized on one side.

2. The capacitor (1) according to claim 1,
wherein the blend comprises polypropylene in the range of 70 weight% to 90 weight%.

3. The capacitor (1) according to one of the preceding claims,
wherein the blend comprises polypropylene in the range of 78 weight% to 82 weight%.

4. The capacitor (1) according to one of the preceding claims,
wherein the polypropylene is a capacitor grade polypropylene.

5. The capacitor (1) according to one of the preceding claims,
wherein the film (2) is extruded and biaxially-stretched.

## Patentansprüche

1. Folienkondensator (1), der eine Folie (2) enthält, die aus einer Mischung aus Polypropylen und Cycloolefin-Copolymer besteht, wobei das in der Mischung verwendete Polypropylen in Homopolymerform vorliegt, wobei die Mischung eine Menge von mindestens zwei Dritteln Polypropylen enthält und wobei das Cycloolefin-Copolymer aus Ethylen im Bereich von 23 Gew.-% bis 27 Gew.-% und Norbornen im Bereich von 73 Gew.-% bis 77 Gew.-% besteht, wobei der Folienkondensator eine Metallisierung aufweist, die Elektroden (3) des Folienkondensators (1) bildet, und die Elektroden eine Legierung von Aluminium, Zink oder Magnesium enthalten,
wobei die Folie (2) auf einer Seite metallisiert ist.

2. Kondensator (1) nach Anspruch 1,
wobei die Mischung Polypropylen im Bereich von 70 Gew.-% bis 90 Gew.-% enthält.

3. Kondensator (1) nach einem der vorhergehenden Ansprüche,
wobei die Mischung Polypropylen im Bereich von 78 Gew.-% bis 82 Gew.-% enthält.

4. Kondensator (1) nach einem der vorhergehenden Ansprüche,
wobei das Polypropylen ein Polypropylen mit Kondensatorqualität ist.

5. Kondensator (1) nach einem der vorhergehenden Ansprüche,
wobei die Folie (2) extrudiert und biaxial gestreckt ist.

## Revendications

1. Condensateur (1) à film comprenant un film (2) qui est constitué d'un mélange de polypropylène et d'un copolymère de cyclo-oléfine, le polypropylène utilisé dans le mélange étant sous forme d'homopolymère, le mélange comprenant une quantité d'au moins deux tiers en poids de polypropylène, et le copolymère de cyclo-oléfine étant constitué d'éthylène dans la plage de 23 % en poids à 27 % en poids et de norbornène dans la plage de 73 % en poids à 77 % en poids,
le condensateur à film comprenant une métallisation qui forme des électrodes (3) du condensateur (1) à film et les électrodes comprenant un quelconque alliage d'aluminium, de zinc ou de magnésium,
le film (2) étant métallisé sur un côté.

2. Condensateur (1) selon la revendication 1, le mélange comprenant un polypropylène dans la plage de 70 % en poids à 90 % en poids.

3. Condensateur (1) selon l'une des revendications précédentes, le mélange comprenant un polypropylène dans la plage de 78 % en poids à 82 % en poids.

4. Condensateur (1) selon l'une des revendications précédentes, le polypropylène étant un polypropylène de qualité condensateur.

5. Condensateur (1) selon l'une des revendications précédentes, le film (2) étant extrudé et étiré de manière biaxiale.
